# EUROPEAN PATENT APPLICATION

(11) **EP 4 140 308 A1**
(43) Date of publication of application: **01.03.2023**
(21) Application number: 22183857.6
(22) Date of filing: 08.07.2022
(51) Int. Cl.: A21C 3/06, A21C 9/06, A21C 9/08

(54) **MACHINE FOR THE PREPARATION OF RING-SHAPED BREADS AND PASTRIES**

(30) Priority: 31.08.2021 ES 202131734 U
(71) Applicant: Colom Rubio, Rebeca, 12006 Castellón de la Plana Castellón (ES); Colom Rubio, Rubén, 12006 Castellón de la Plana Castellón (ES); Colom Rubio, Marc, 12006 Castellón de la Plana Castellón (ES)
(72) Inventor: COLOM RUBIO, Rubén, 12006 Castellón de la Plana (Castellón) (ES); COLOM GARI, Vicente, 12006 Castellón de la Plana (Castellón) (ES)
(74) Representative: Ungria López, Javier

(57) **Abstract**

The machine comprises a conveyor belt (1) with a forming segment which passes through a cylindrical inner space of a casing (5) in which the conveyor belt (1) adopts the circular shape of said cylindrical inner space, in coincidence with which there is located a cantilevered cylindrical rod (6) secured at one of the ends thereof; where between the cylindrical rod (6) and the surface demarcating the cylindrical inner space of the casing (5) there is generated a coaxial gap (8) in which ring-shaped breads and pastries (2) are formed. The casing (5) comprises a cylindrical tube structure formed by two halves which are attached by means of several hinged connections (9); where there are located in areas opposite said hinged connections anchoring mechanisms (10) allowing the closure and opening of said casing (5).

## Description

### Object of the invention

The present invention relates to a machine for the preparation of ring-shaped breads and pastries comprising a conveyor belt integrating an upper branch and a lower branch; where a segment of the upper branch passes through a cylindrical inner space of a casing in which the conveyor belt adopts the circular shape of said cylindrical inner space; and where there is located in coincidence with this cylindrical inner space a cantilevered cylindrical rod secured at one of the ends thereof, such that between the cylindrical rod and the cylindrical inner space there is generated a coaxial gap in which ring-shaped breads and pastries are formed from dough portions which have been previously prepared and are driven through the conveyor belt causing them to pass through said coaxial space.

Based on this premise, the object of the invention relates to a new configuration of the casing which allows a quick and easy access to the inner space thereof, and where the cylindrical rod is detachable to enable exchanging it for another, and thereby to enable obtaining ring-shaped breads and pastries in different sizes. Another object of the invention relates to a system to enable adjusting the positioning of the cylindrical rod. Another detail of the invention relates to simple, practical means to enable adjusting the tension of the conveyor belt, which facilitates its assembly and disassembly, as well as the exchange thereof for other conveyor belts.

### Technical problem to be resolved and background of the invention

Machines for the preparation of breads and pastries are known today, among which, machines for the preparation of ring-shaped breads and pastries should be highlighted.

These machines comprise a conveyor belt integrating an upper branch and a lower branch; where a segment of the upper branch passes through the inner space of a cylindrical-shaped tubular body in which the conveyor belt adopts the circular shape of said body tubular; and where there is located in coincidence with the inner space of the body tubular a cantilevered cylindrical rod which is secured at one of the ends thereof, such that between the cylindrical rod and the body tubular there is generated a coaxial gap in which ring-shaped breads and pastries are formed from dough portions which are driven through the conveyor belt, passing them through said coaxial gap to form ring-shaped breads and pastries.

These machines have the limitation that the tubular body is a fixed element that does not allow an easy access to its inner space, and at the same time it is not possible to separate the tubular body from the conveyor belt, so the machine is limited to a specific set of conveyor belt and tubular body.

### Description of the invention

In order to achieve the objectives and avoid the drawbacks mentioned in the preceding sections, the invention proposes machine for the preparation of ring-shaped breads and pastries comprising a conveyor belt coupled in two end rollers: a first drive roller driving the movement of the conveyor belt, and a second tubular rotating idler roller parallel to the first roller.

A forming segment which is part of an upper branch of the conveyor belt passes through a cylindrical inner space of a casing in which the conveyor belt adopts the circular shape of said cylindrical inner space; where there is located in coincidence with this cylindrical inner space a cantilevered cylindrical rod secured at one of the ends thereof; and where between the cylindrical rod and the surface demarcating the cylindrical inner space of the casing there is generated a coaxial gap in which ring-shaped breads and pastries are formed from dough portions which have been previously prepared and are driven through the upper branch of the conveyor belt causing them to pass through said coaxial gap.

The casing comprises a cylindrical tube structure formed by two halves: a first half and a second half, which are attached to one another by means of several hinged connections arranged in a longitudinal alignment. There are located in areas opposite said hinged connections anchoring mechanisms which, in an active position, ensure the closure of said casing in a closed position, maintaining the coaxial gap, and in an inactive position of said anchoring mechanisms the casing can be opened to access its cylindrical inner space where the cylindrical rod and the forming segment which is part of the conveyor belt are arranged.

The casing is fixed in a detachable manner to a frame of the machine by means of threaded knobs by way of screws; where said fixing is performed through plates integral with the first half of the casing; and where said first half of the casing is located below the upper branch of the conveyor belt.

Each anchoring mechanism comprises a screw element associated with the second half of the casing; where said screw element is configured for being coupled in a threaded hole located in the first half of the casing; and where the tightening of the various screw elements ensures the assembly and closure of the casing.

The cylindrical rod comprises a tube and a shaft which is prolonged outwards from one end of the casing; where the cylindrical rod assembly is fixed in cantilever fashion through said shaft; where the tube is coaxially coupled on the shaft; and where the tube is axially immobilised to the shaft by means of an end screw threaded into an end of said shaft.

The adjustment device comprises at least one movable bridge to which there is fixed in cantilever fashion the shaft of the cylindrical rod by means of screws, a fixed support, a flywheel element with a male thread, and a counter-flywheel coupled to the male thread of the flywheel element configured for immobilising same; where the movable bridge is coupled to the fixed support by means of an articulated connection; and where the positioning of the movable bridge and the immobilisation thereof are carried out by means of the flywheel element and the counter-flywheel.

The machine of the invention further comprises an adjustable system for tensioning or loosening the conveyor belt; where said adjustable system includes means for moving the second roller parallel to the first roller and enabling the immobilisation thereof in a fixed position.

The adjustable system for tensioning or loosening the conveyor belt comprises at least two parallel racks including ends which are in contact with adjustable threaded stops coupled to side parts integral with end segments of a transverse shaft in which the second tubular rotating idler roller is coaxially coupled.

The two parallel racks mesh with two pinions which are in turn fitted in a transverse axle associated with a reduction gear mechanism for transmitting rotational movement to the transverse axle and linear movement to the racks; where the reduction gear mechanism includes a side flywheel configured for activating said reduction gear mechanism as a whole by means of rotation.

The casing is an outer tube (formed by the described two halves) which can be opened very easily, such that it is only necessary to untighten several screw elements including holding knobs, whereby the casing is opened in half, which allows the conveyor belt to be taken out through one side in a very quick and easy manner.

To enable disassembling the conveyor belt, it must first be loosened, and in order not to lose the correct centring of the conveyor belt, the described adjustable system is included allowing the belt to be loosened very easily by acting on the side flywheel, whereby the two spindles by way of tension devices are moved simultaneously.

In that sense, the side flywheel of the adjustable system for adjusting the tension of the conveyor belt allows the two tension devices (spindles) of the belt to be untightened at the same time and without losing the tensioning position between the two sides of the belt, such that this detail is important to prevent having to readjust the tension to centre the belt every time.

It should be mentioned that once the conveyor belt has been disassembled, the entire casing assembly which is secured to the frame or bench of the machine with several threaded knobs can be disassembled. This operation allows the possibility of assembling another different casing having another measurement so as to enable producing another weight range of the ring-shaped products; remarking that in the machine of the invention the weight range depends on the diameter of the cylindrical inner space of the casing and on the diameter of the cylindrical rod.

With regard to what has been mentioned in the preceding paragraph, the possibility of disassembling the entire assembly in an easy manner is a significant advantage because it allows manufacturing ring-shaped breads and pastries with a wide weight and size range without having to change the machine, such that there is only a need to change the tube-shaped casing assembly and the conveyor belt. It should be highlighted that these two operations are carried out in a time below ten minutes and can furthermore be performed by any person, even though said person is not a technician.

The diameter of the cylindrical rod can be modified in a very simple manner, this operation being carried out by only untightening the end screw in order to change the tube of said cylindrical rod without disassembling its shaft. This allows tinkering with the weight range of the ring-shaped breads and pastries because the weights which can be produced will change by only changing the tube of said cylindrical rod. In that sense, to tinker with the weight range, the tube which is part of the cylindrical rod assembly, acting on the end screw securing said tube to the shaft, can be exchanged.

Moreover, the height of the cylindrical rod must be corrected every time the casing is changed so that the cylindrical inner space of the casing is concentric with respect to the cylindrical rod, such that this operation can be carried out in a very simple manner by acting on the adjustment device including the flywheel element which allows the cylindrical rod to move up and down in a very simple and comfortable manner; where this operation is essential for the change of the assembly to be effective.

In summary, it should be highlighted that in the machine of the invention it is possible to change the two halves of the casing with a tubular structure, the cylindrical rod, and also the conveyor belt in a quick and easy manner; where the concentric positioning of the cylindrical rod can be adjusted by means of the adjustment device, unlike what occurs conventionally where this adjustment does not exist.

All these described advantages allow having a versatile machine that is easy to adapt and clean.

Next, to help better understand this specification and as an integral part thereof, a series of figures is attached in which the object of the invention is depicted in an illustrative and non-limiting manner.

### Brief description of the figures

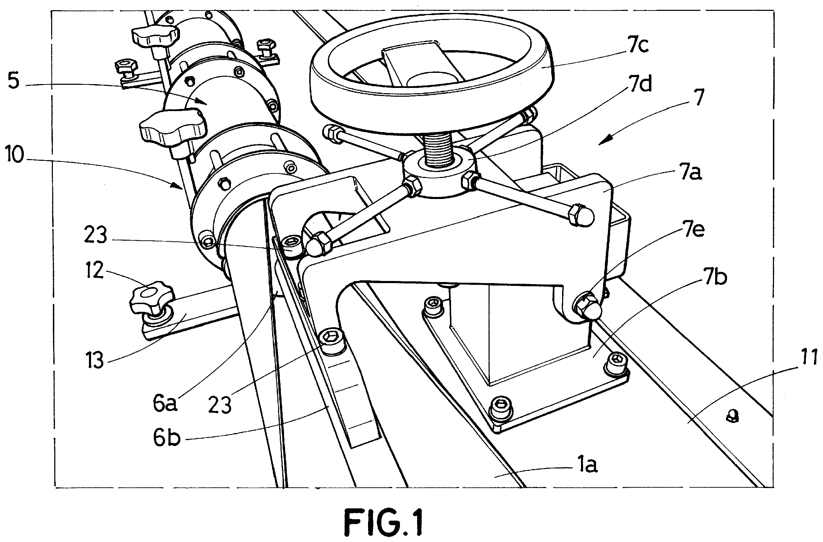

**Figure 1** shows a perspective view of a part of the machine for the preparation of ring-shaped breads and pastries, object of the invention.

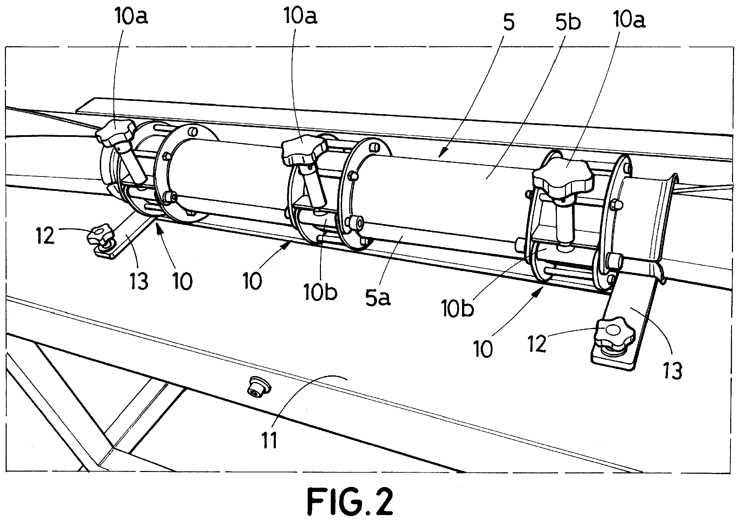

**Figure 2** shows another perspective view of another part of the machine of the invention.

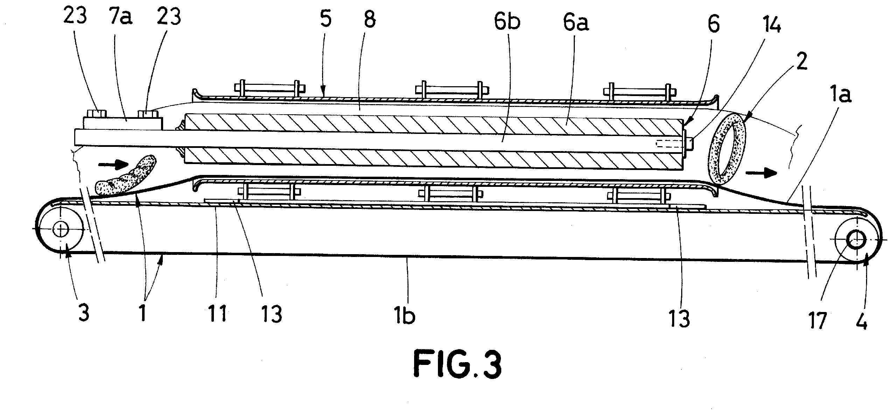

**Figure 3** shows a sectioned elevation view of the machine of the invention.

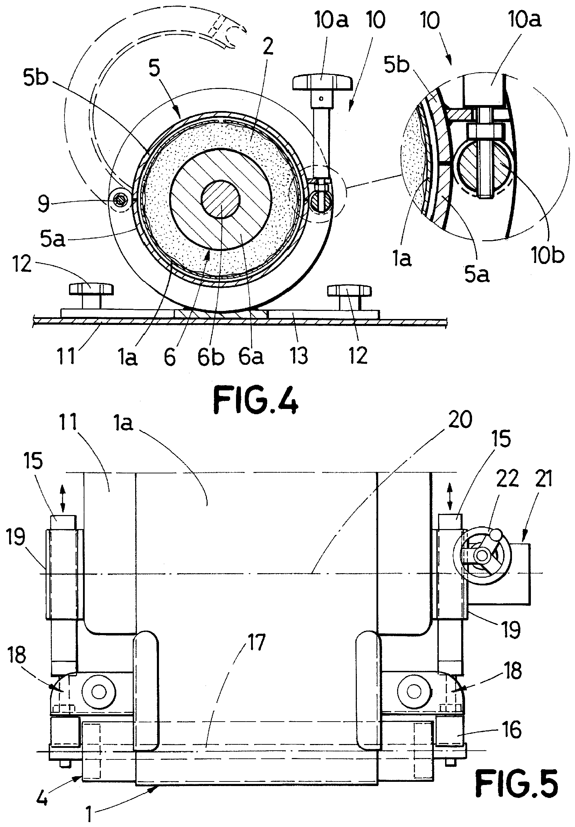

**Figure 4** shows a sectioned profile view of the machine.
**Figure 5** depicts a plan view of a part of the machine of the invention, in which an adjustment device for adjusting the tension of a conveyor belt which drives dough portions from which ring-shaped breads and pastries are obtained is essentially shown.

### Description of an exemplary embodiment of the invention

Considering the numbering used in the figures, the machine for the preparation of ring-shaped breads and pastries 2 comprises a conveyor belt 1 coupled in two end rollers: a first drive roller 3 driving the movement of the conveyor belt 1 and a second tubular rotating idler roller 4 associated with an adjustable system to enable tensioning/loosening the conveyor belt 1 integrating an upper branch 1a and a lower branch 1b.

A forming segment of the upper branch 1a of the conveyor belt 1 passes through a cylindrical inner space of a casing 5 in which the conveyor belt 1 adopts the circular shape of said cylindrical inner space; where there is located in coincidence with this cylindrical inner space of the casing 5 a cantilevered cylindrical rod 6 secured at one of the ends thereof to a movable bridge 7a which is part of an adjustment device 7 configured to enable adjusting the specific location of the cylindrical rod 6 in a coaxial direction with respect to the cylindrical inner space of the casing 5; where both the cylindrical rod 6 and the casing 5 are arranged substantially in the horizontal direction.

Between the cylindrical rod 6 and the surface demarcating the cylindrical inner space of the casing 5, there is generated a coaxial gap 8 in which ring-shaped breads and pastries 2 are formed from dough portions which have been previously prepared and are driven through the upper branch 1a of the conveyor belt 1 causing them to pass through said coaxial gap 8 in order to form ring-shaped breads and pastries 2.

The casing 5 comprises a cylindrical tube structure formed by two halves: a first half 5a and a second half 5b, which are attached to one another by means of several hinged connections 9 arranged in a longitudinal alignment; where there are located in areas opposite said hinged connections 9 anchoring mechanisms 10 so as to ensure, firstly, the closure of said casing 5, maintaining the coaxial gap 8 while using the machine, and to enable, secondly, access to the cylindrical inner space of the casing 5 where the cylindrical rod 6 and the forming segment of the conveyor belt 1 are housed.

The casing assembly 5 is fixed in a detachable manner to a frame 11 of the machine by means of threaded knobs 12 by way of screws; where said fixing is performed through plates 13 integral with the first half 5a of the casing 5; and where said first half 5a of the casing 5 is located below the upper branch 1 a of the conveyor belt 1.

Each anchoring mechanism 10 comprises a screw element 10a associated with the second half 5b of the casing 5; where said screw element 10a is configured for being coupled in a threaded hole 10b located in the first half 5a of the casing 5, such that the tightening of the various screw elements 10a ensures the assembly and closure of the casing 5.

The cylindrical rod assembly 6 comprises a tube 6a made of a plastic material and a metal shaft 6b which is prolonged outwards from one end of the casing 5; where the cylindrical rod assembly 6 is fixed in cantilever fashion through said shaft 6b to the movable bridge 7a of the adjustment device 7; and where the tube 6a is axially immobilised to the shaft 6b by means of an end screw 14.

The adjustment device 7 comprises the movable bridge 7a, a fixed support 7b integral with the frame 11, a flywheel element 7c with a male thread, and a counter-flywheel 7d coupled to the male thread of the flywheel element 7c for immobilising same. The movable bridge 7a is coupled to the fixed support 7b by means of an articulated connection 7e, while at the same time the positioning of the movable bridge 7a and the immobilisation thereof are carried out by means of the flywheel element 7c and the counter-flywheel 7d. From the articulated connection 7e to the cylindrical rod 6 there is a distance which constitutes a radius of rotation to enable positioning the movable bridge 7a in the stable position required according to the diameter of the chosen casing 5.

The diameters of commonly used casings 5 are 100 mm, 125 mm, and 150 mm; such that taking a 125 mm casing as a reference, it is adjusted such that when the cylindrical rod 6 is in a horizontal position, an exact height for the casing 5 of 125 mm is achieved. In this situation, since there is only a need to move the casing 25 mm up or down, if said casing 5 is changed for another one measuring 100 mm or 150 mm, the radial movement caused by the rotation with the radius that it has is very small, and this has no influence whatsoever since said radial movement is practically imperceptible, with there being no influence on the ring-shaped dough 2.

The adjustable system for tensioning or loosening the conveyor belt 1 comprises two parallel racks 15 including ends which are in contact with adjustable threaded stops 18 coupled to side parts 16 integral with end segments of a transverse shaft 17 in which the second tubular rotating idler roller 4 is coaxially coupled. The two racks 15 mesh with two pinions 19 which are in turn fitted in a transverse axle 20 associated with a reduction gear mechanism 21 for transmitting rotational movement to the transverse axle 20 and linear movement to the racks 15 and for thereby moving the assembly of transverse shaft 17 and second roller 4 in order to vary the tension of the conveyor belt 1. The reduction gear mechanism 21 includes a side flywheel 22 whereby said reduction gear mechanism 21 as a whole is rotated.

The cylindrical rod assembly 6 is fixed to the movable bridge 7a of the adjustment device 7 by means of a pair of screws 23.

The diameter of the cylindrical rod 6 can be modified in a very simple manner, with this operation being carried out by untightening only the end screw 14 in order to change the tube 6a of said cylindrical rod 6 without disassembling its shaft 6b. This allows tinkering with the weight range of the ring-shaped breads and pastries because the weights which can be produced will change by only changing the tube 6a of said cylindrical rod 6. In that sense, to tinker with the weight range, the tube 6a which is part of the cylindrical rod assembly 6, acting on the end screw 14 securing said tube 6a to the shaft 6b, can be exchanged.

## Claims

1. **A machine for the preparation of ring-shaped breads and pastries,** comprising a conveyor belt (1) coupled in two end rollers: a first drive roller (3) configured for driving the movement of the conveyor belt (1), and a second tubular rotating idler roller (4) parallel to the first roller (3); where a forming segment which is part of an upper branch (1a) of the conveyor belt (1) passes through a cylindrical inner space of a casing (5) in which the conveyor belt (1) adopts the circular shape of said cylindrical inner space; where there is located in coincidence with this cylindrical inner space a cantilevered cylindrical rod (6) secured at one of the ends thereof; and where between the cylindrical rod (6) and the surface demarcating the cylindrical inner space of the casing (5) there is generated a coaxial gap (8) in which ring-shaped breads and pastries (2) are formed from dough portions which have been previously prepared and are driven through the upper branch (1a) of the conveyor belt (1) causing them to pass through said coaxial gap (8); **characterised in that** the casing (5) comprises a cylindrical tube structure formed by two halves: a first half (5a) and a second half (5b), which are attached to one another by means of several hinged connections (9) arranged in a longitudinal alignment; where there are located in areas opposite said hinged connections anchoring mechanisms (10) which, in an active position, ensure the closure of said casing (5) in a closed position maintaining the coaxial gap (8), and in an inactive position of said anchoring mechanisms (10) the casing (5) can be opened to access its cylindrical inner space in which the cylindrical rod (6) and the forming segment which is part of the conveyor belt (1) are arranged.

2. **The machine for the preparation of ring-shaped breads and pastries** according to claim 1, **characterised in that** the casing (5) is fixed in a detachable manner to a frame (11) of the machine by means of threaded knobs (12) by way of screws; where said fixing is performed through plates (13) integral with the first half (5a) of the casing (5); and where said first half (5a) of the casing (5) is located below the upper branch (1a) of the conveyor belt (1).

3. **The machine for the preparation of ring-shaped breads and pastries** according to any one of the preceding claims, **characterised in that** each anchoring mechanism (10) comprises a screw element (10a) associated with the second half (5b) of the casing (5); where said screw element (10a) is configured for being coupled in a threaded hole (10b) located in the first half (5a) of the casing (5); and where the tightening of the various screw elements (10a) ensures the assembly and closure of the casing (5).

4. **The machine for the preparation of ring-shaped breads and pastries** according to any one of the preceding claims, **characterised in that** the cylindrical rod (6) comprises a tube (6a) and a shaft (6b) which is prolonged outwards from one end of the casing (5); where the cylindrical rod assembly (6) is fixed in cantilever fashion through said shaft (6b); where the tube (6a) is coaxially coupled on the shaft (6b); and where the tube (6a) is axially immobilised to the shaft (6b) by means of an end screw (14) threaded into an end of the shaft (6b).

5. **The machine for the preparation of ring-shaped breads and pastries** according to claim 4, **characterised in that** the adjustment device (7) comprises a movable bridge (7a) to which there is fixed in cantilever fashion the shaft (6b) of the cylindrical rod (6), a fixed support (7b), a flywheel element (7c) with a male thread, and a counter-flywheel (7d) coupled to the male thread of the flywheel element (7c) configured for immobilising same; where the movable bridge (7a) is coupled to the fixed support (7b) by means of an articulated connection (7e); and where the positioning of the movable bridge (7a) and the immobilisation thereof are carried out by means of the flywheel element (7c) and the counter-flywheel (7d).

6. **The machine for the preparation of ring-shaped breads and pastries** according to any one of the preceding claims, **characterised in that** it comprises an adjustable system for tensioning or loosening the conveyor belt (1); where said adjustable system includes means for moving the second roller (4) parallel to the first roller (3) and enabling the immobilisation thereof in a fixed position.

7. **The machine for the preparation of ring-shaped breads and pastries** according to claim 6, **characterised in that** the adjustable system for tensioning or loosening the conveyor belt (1) comprises at least two parallel racks (15) including ends which are in contact with adjustable threaded stops (18) coupled to side parts (16) integral with end segments of a transverse shaft (17) in which the second tubular rotating idler roller (4) is coaxially coupled.

8. **The machine for the preparation of ring-shaped breads and pastries** according to claim 7, **characterised in that** the two parallel racks (15) mesh with two pinions (19), which are in turn fitted in a transverse axle (20) associated with a reduction gear mechanism (21) for transmitting rotational movement to the transverse axle (20) and linear movement to the racks (15); where the reduction gear mechanism (21) includes a side flywheel (22) configured for activating said reduction gear mechanism (21) as a whole by means of rotation.
